# EUROPEAN PATENT SPECIFICATION

(11) **EP 1 236 405 B1**
(45) Date of publication and mention of the grant of the patent: **21.06.2006**
(21) Application number: 01200766.2
(22) Date of filing: 01.03.2001
(51) Int. Cl.: A23J 3/34, A23J 3/16, A23L 1/305, A23K 1/16

(54) **Hypoallergenic formulae inducing oral tolerance to soy proteins**
Hypoallergene Nahrungsmittel zur Induzierung oraler Toleranz gegenüber Sojaproteinen
Compositions nutritives hypo-allergéniques induisant une tolérance orale aux protéines de soja

(43) Date of publication of application: 04.09.2002
(73) Proprietor: SOCIETE DES PRODUITS NESTLE S.A., 1800 Vevey (CH)
(72) Inventor: Fritsche, Rodolphe, 1814 La Tour-de-Peilz (CH); Bovetto, Lionel, 74500 Larringes (FR)

(56) References cited:
- EP-A- 0 626 177
- EP-A- 0 629 350
- EP-A- 0 680 699
- EP-A- 0 827 697
- EP-A- 0 934 700
- WO-A-00/42863
- JP-A- 8 033 448
- JP-A- 11 276 086
- US-A- 4 324 805
- US-A- 5 663 058
- FRITSCH¹ R: "Induction of oral tolerance to cow's milk proteins in rats fed with a whey protein hydrolysate" NUTRITION RESEARCH, XX, XX, vol. 18, no. 8, 1998, pages 1335-1341, XP002102881 ISSN: 0271-5317
- PATENT ABSTRACTS OF JAPAN vol. 008, no. 085 (C-219), 18 April 1984 (1984-04-18) & JP 59 006839 A (FUJI SEIYU KK), 13 January 1984 (1984-01-13)
- MAHMOUD M I ET AL: "ENZYMATIC HYDROLYSIS OF CASEIN: EFFECT OF DEGREE OF HYDROLYSIS ON ANTIGENICITY AND PHYSICAL PROPERTIES" JOURNAL OF FOOD SCIENCE, INSTITUTE OF FOOD TECHNOLOGISTS. CHICAGO, US, vol. 57, no. 5, 1 September 1992 (1992-09-01), pages 1223-1229, XP000311013 ISSN: 0022-1147
- NICODEMUS C ET AL: "Integrated clinical experience with tolerogenic peptides" INTERNATIONAL ARCHIVES OF ALLERGY AND IMMUNOLOGY, XX, XX, vol. 113, no. 1/3, 1997, pages 326-328, XP002102867 ISSN: 1018-2438

## Description

### Field of the invention

This invention relates to a hypoallergenic formulae for the prevention of an allergic response to soy proteins. It also relates to a process for preparing soy hydrolysates useful for oral tolerance induction to soy proteins.

### Background of the invention

During the common process of nutrition, dietary proteins are presented to the immune system via the gut, followed by an immune unresponsiveness to the ingested nutrients. This vital phenomenon, called oral tolerance, is efficient for the large majority of people. If oral tolerance fails, food allergy occurs, requiring the strict avoidance of the incriminated food.

Targeted food avoidance represents a hard task for adult patients with food allergy. Accordingly, the art has made attempts to eliminate the allergenicity of the above identified allergens by converting them into peptides by hydrolysis.

For example, US 5039532 discloses a hypoallergenic whey protein hydrolysate product, particularly for employment in infant formula, wherein whey material first is hydrolyzed with a proteolytic enzyme and then the enzymatic hydrolyzate is subjected to a heat treatment to denature proteins which remain intact after the first hydrolysis and which constitute allergens, and then the heated hydrolyzate is cooled. The cooled heat-treated hydrolyzate then is hydrolyzed by a proteolytic enzyme to provide a hydrolyzate substantially free of allergens of protein origin.

Also, JP11009202 provides a process for the preparation of rice with reduced allergen content by immersing raw rice in aqueous salt solution to extract salt-soluble protein, then allowing protease from lactic acid bacterium to act upon rice. The method permits efficient removal of proteins serving as allergens with a high removal rate.

It has also been shown that hypoallergenic whey protein hydrolysate product may induce oral tolerance to cow's milk. For example, EP 0 827 697 and Nutrition research (1998), p.1335-1341 disclose hydrolysed whey having a DH of 15 to 20% and a reduced immunologic detection. In contrast, EP0 629 350 discloses the use of extensively whey protein hydrolysate (DH > 20) substantially free of allergenic proteins for the preparation of a dietary composition for the induction of cow's milk tolerance. Later, tolerogenic peptides of cow's milk protein inducing oral tolerance against milk proteins, have then been identified in WO 00/42863.

Soy however is well-known as an allergen and only hypoallergenic products based on soy have already been described. For example, in SU 1494898 a dried product for child's food production is prepared by dissolving soybean protein in water, heating adding pancreatine for hydrolysis and separating hydrolysate for processing. Also, JP 08056600 discloses allergen reducing for soybean, by soaking soybeans in aqueous solution containing dissolved protein decomposing enzyme.

As is clear from the art cited above, moderate to extensive milk protein hydrolysates have been shown to induce oral tolerance. The primary focus of the art to date in dealing with allergies, and particularly to vegetable proteins has been to find preparations which will not induce an allergic response, i.e. to provide non-allergenic formulations. Thus, there is still a need for a soy protein based formulae that would be suitable for oral tolerance induction, i.e. not only enable a person allergic to soy to avoid an allergic response, but allow him to consume unaltered soy products.

Thus, it is clear that the art lacked the information to provide soy protein based formulae that would be suitable for oral tolerance induction. The present invention thus aims to provide a soy based formulae which is hypoallergenic, i.e. "the immuno-reactive protein amount must be lower than 1% of that of nitrogen-containing substances in the formula" and which should keep their full potential of inducing oral tolerance to whole soy proteins. In addition such formulae must have a good nutritional value and an acceptable taste.

### Summary of the invention

Accordingly, in a first aspect, the present invention relates to a hypoallergenic soy-based formulae for the induction of oral tolerance to soy proteins in at risk individuals, which comprises a soy protein hydrolysate having a degree of hydrolysis of less than 25% and an antigenicity over 100 times reduced if compared to intact soy proteins.

In fact, it was found that moderate enzymatic hydrolysis of soy proteins reduces allergenicity of soy hydrolysates over 100 times while keeping its tolerogenic capacity.

Preferably, the degree of hydrolysis of the soy protein hydrolysate is from 10 to 20%.

A major advantage of this composition is to induce oral tolerance to whole soy proteins in "at risk" individuals, in order to avoid eventual sensitization by use of native tolerogens. Moreover, the present formulae offers both hypoallergenic and tolerogenic properties such that it might be an alternative to cow's milk based hypoallergenic formulas for prevention of allergic sensitisation in "at risk" babies, for example, and particularly where soy is a traditional food.

In a further aspect, the present invention relates to the use of a soy protein hydrolysate having a degree of hydrolysis of less than 25% and a reduced antigenicity over 100 times, for the preparation of a hypoallergenic formula for the induction of oral tolerance to soy proteins for mammals susceptible to soy protein allergy.

### Detailed description of the invention

In the present invention, the term tolerance is to be understood as a state of specific immunological unresponsivness. Both humoral (antibodies) and cell-mediated (lymphocyte ....) pathways of the immune response may be suppressed by tolerance induction. A breakdown of oral tolerance is considered to be the underlying cause of food allergy.

The term allergen is to be understood as a protein or macropeptide capable of initiating allergic reactions in humans, particularly at risk infants or nurslings. Infants are considered being "at risk" of protein allergy when either one, two parents or one sibling is atopic.

The term "degree of hydrolysis" (DH) means the percentage of nitrogen in the form of amino nitrogen as compared to total nitrogen. It is a measure of the extent to which the protein has been hydrolysed.

According to a first aspect, a hypoallergenic soy-based formulae for the induction of oral tolerance to soy proteins in at risk individuals, is concerned.

The formula according to the present invention comprises a soy protein hydrolysate having a degree of hydrolysis of less than 25% and a reduced antigenicity over 100 times if compared to intact soy proteins, while keeping its tolerogenic capacity.

Preferably, the soy protein hydrolysate has a degree of hydrolysis from 10 to 20%.

In one embodiment, the hypoallergenic formulae may be an infant formulae, a nutritional formulae, or a soy protein hydrolysate used as a module for protein supplementation, for example. Also, for clinical nutrition, it may be soy based formula or pure soy hydrolysate supplementation.

The nutritional formulae is preferably an enterally administrable formula; for example in the form of a powder, a liquid concentrate, or a ready-to-drink beverage. It may contain a source of nitrogens, a source of carbohydrates, a source of lipids and vitamins and minerals, for example.

Preferably the source of nitrogen is in the form of a protein hydrolysate, or free amino acids, and combinations thereof. Preferably the protein hydrolysates are hydrolysates of soy protein or a peptide mixture isolated from hydrolysates of soy protein. The source of dietary protein preferably provides about 5% to about 30% of the energy of the nutritional formula; for example about 10% to about 20% of the energy. The remaining energy of the nutritional formula may be provided in the form of carbohydrates and fats.

If the nutritional formula includes a fat source, the fat source preferably provides about 5% to about 55% of the energy of the nutritional formula; for example about 20% to about 50% of the energy. The lipids making up the fat source may be any suitable fat or fat mixture. Vegetable fats are particularly suitable; for example palm oil, coconut oil, safflower oil, sunflower oil, corn oil, canola oil, lecithins, and the like. Animal fats such as milk fats may also be added if desired. The lipids may also include medium-chain triglycerides; for example up to about 80% by weight of lipids as medium-chain triglycerides.

If the nutritional formula includes a carbohydrate source, the carbohydrate source preferably provides about 30% to about 80% of the energy of the nutritional formula. Any suitable carbohydrates may be used, for example sucrose, glucose, fructose, corn syrup solids, and maltodextrins, and mixtures thereof.

Dietary fibre may also be added if desired. Numerous types of dietary fibre are available. Suitable sources of dietary fibre, among others, include pea, oat, pectin, guar gum, and gum arabic. If used, the dietary fibre preferably comprises up to about 5% of the energy of the nutritional formula. Suitable vitamins and minerals may be included in the nutritional formula in the usual manner to meet the appropriate guidelines. One or more food grade emulsifiers may be incorporated into the nutritional formula if desired; for example diacetyl tartaric acid esters of monodiglycerides, lecithin and mono- and di-glycerides. Similarly suitable salts and stabilisers may be included.

The nutritional formula may be prepared in any suitable manner. For example, the nutritional formula may be prepared by blending together the source of dietary protein, the carbohydrate source, and the lipid source in appropriate proportions. If used, the emulsifiers may be included in the blend. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently about 50°C to about 80°C to aid dispersal of the ingredients. Commercially available liquefiers may be used to form the liquid mixture. The liquid mixture is then homogenised; for example in two stages.

The liquid mixture may then be thermally treated to reduce bacterial loads. For example, the liquid mixture may be rapidly heated to a temperature in the range of about 80°C to about 150°C for about 5 seconds to about 5 minutes. This may be carried out by steam injection, autoclave or by heat exchanger; for example a plate heat exchanger.

The liquid mixture may then be cooled to about 60°C to about 85°C; for example by flash cooling. The liquid mixture may then be again homogenised; for example in two stages at about 7 MPa to about 40 MPa in the first stage and about 2 MPa to about 14 MPa in the second stage. The homogenised mixture may then be further cooled to add any heat sensitive components; such as vitamins and minerals. The pH and solids content of the homogenised mixture is conveniently standardised at this point.

If it is desired to produce a powdered nutritional formula, the homogenised mixture is transferred to a suitable drying apparatus such as a spray drier or freeze drier and converted to powder. The powder should have a moisture content of less than about 5% by weight.

If it is desired to produce a liquid formula, the homogenised mixture is preferably aseptically filled into suitable containers. Aseptic filling of the containers may be carried out by pre-heating the homogenised mixture (for example to about 75 to 85°C) and then injecting steam into the homogenised mixture to raise the temperature to about 140 to 160°C; for example at about 150°C. The homogenised mixture may then be cooled, for example by flash cooling, to a temperature of about 75 to 85°C. The homogenised mixture may then be homogenised, further cooled to about room temperature and filled into containers. Suitable apparatus for carrying out aseptic filling of this nature is commercially available. The liquid formula may be in the form of a ready to feed formula having a solids content of about 10 to about 14% by weight or may be in the form of a concentrate; usually of solids content of about 20 to about 26% by weight. Flavours may be added to the liquid formulas so that the formulas are provided in the form of convenient, ready-to-drink beverages.

The nutritional formula may be used in the prevention of allergic response to whole soy proteins. It may be fed to "at risk individuals" in an amount of about 10 to 150 g per day. It is particularly intended for babies, 0-12 months infants or young children up to 10 years, for example.

The hypoallergenic formulae according to the present invention may also be in the form of a pharmaceutical composition to induce oral tolerance. To prepare such a formulae hydrolysate could be additioned by sucrose or compressing agents to produce tablets, or directly filled in capsule.

In another embodiment, the hypoallergenic formula is a nutritionally complete pet food composition. It may be in powdered, dried form, semi-moist or a wet, chilled or shelf stable pet food product. It can also be dietary supplements for pets or pharmaceutical compositions for pets. These pet foods may be produced as is conventional. Apart from the soy protein hydrolysate according to the present invention, these pet foods may include any one or more of a starch source, a protein source and lipid source.

Suitable starch sources are, for example, grains and legumes such as corn, rice, wheat, barley, oats, and mixtures of these. Suitable protein sources may be selected from any suitable animal or vegetable protein source; for example low allergenic protein mixture, poultry meal, for example. For elderly animals, it is preferred for the protein source to contain a high quality protein. Suitable lipid sources include meats, animal fats and vegetable fats. Further, various other ingredients, for example, sugar, salt, spices, seasonings, vitamins, minerals, flavouring agents, fats and the like may also be incorporated into the pet food as desired.

For dried pet foods a suitable process is extrusion cooking, although baking and other suitable processes may be used. When extrusion cooked, the dried pet food is usually provided in the form of a kibble. If a prebiotic is used, the prebiotic may be admixed with the other ingredients of the dried pet food prior to processing. A suitable process is described in European patent application No 0850569; the disclosure of which is incorporated by reference. If a probiotic micro-organism is used, the organism is best coated onto or filled into the dried pet food. A suitable process is described in European patent application No 0862863; the disclosure of which is incorporated by reference.

For wet foods, the processes described in US patents 4,781,939 and 5,132,137 may be used to produce simulated meat products. The disclosures of these patents are incorporated by reference. Other procedures for producing chunk type products may also be used; for example cooking in a steam oven. Alternatively, loaf type products may be produced by emulsifying a suitable meat material to produce a meat emulsion, adding a suitable gelling agent, and heating the meat emulsion prior to filling into cans or other containers.

The amount of prebiotic in the pet food is preferably about 20% by weight; especially about 10% by weight. For example, the prebiotic may comprise about 0.1% to about 5% by weight of the pet food. For pet foods which use chicory as the prebiotic, the chicory may be included to comprise about 0.5% to about 10% by weight of the feed mixture; more preferably about 1% to about 5% by weight.

If a probiotic microorganism is used, the pet food preferably contains about 10⁴ to about 10¹⁰ cells of the probiotic microorganism per gram of the pet food; more preferably about 10⁶ to about 10⁸ cells of the probiotic microorganism per gram. The pet food may contain about 0.5% to about 20% by weight of the mixture of the probiotic microorganism; preferably about 1% to about 6% by weight; for example about 3% to about 6% by weight.

Further, if desired, the bacteria strain may be encapsulated; for example in a sugar matrix, fat matrix or polysaccharide matrix.

The pet foods may contain other active agents such as long chain fatty acids. Suitable long chain fatty acids include alpha-linoleic acid, gamma linoleic acid, linoleic acid, eicosapentanoic acid, and docosahexanoic acid. Fish oils are a suitable source of eicosapentanoic acids and docosahexanoic acid. Borage oil, blackcurrent seed oil and evening primrose oil are suitable sources of gamma linoleic acid. Safflower oils, sunflower oils, corn oils are suitable sources of linoleic acid. If necessary, the pet foods are supplemented with minerals and vitamins so that they are nutritionally complete.

A process for the preparation of a soy protein hydrolysate useful in the induction of oral tolerance to soy proteins in at risk individuals, comprises the following steps:
i) a soy-based proteinaceous material is solubilized in warm water,
ii) it is subjected to proteolytic hydrolysis until a degree of hydrolysis of less than 25%;
iii) then it is treated to inactivate residual enzyme activity.

The soy-based proteinaceous material to be treated may be any composition comprising soy protein material and in partuclar solution or dispersion of soy proteins : soy isolates, soy concentrates, for example.

In general, the protein content may vary within the range of about 70 to 95% by weight but the starting material is preferably as rich in protein as possible.

The proteinaceous material can be solubilized in warm demineralised water (40-65°C) and at 4-20% w/w preferably 10% and pH can be adjusted to about 2.5 to 11 depending on the nature of the proteolytic enzyme to be used. For example, in the case of proteolytic enzyme such as alcalase, the pH may be adjusted to about 7.0-9.0.

Then, soy proteins present in the proteinaceous material can be modified with proteolytic enzymes into protein hydrolysate having a degree of hydrolysis (α-amino-N/Ntot) of less than 25%, preferably of 10 -20 %.

The proteolytic enzymes may be for example, from animal or vegetable origins (alcalase, pepsin, chymotrypsin, trypsin, intestinal mucosa extract, pancreatin, chymosin, papain, bromelaïn, ficin), bacterial or fungi origins (serine and metalloproteases from *Bacillus subtilis, Bacillus licheniformis, Aspergillus orizae, Aspegillus wentii* and acidic proteases from *Aspergillus orizae, Aspergillus wentïi*, *Mucor miehei, Mucor pusillus, Endothia parasitica*) or a combination of these.

During hydrolysis, concentration of proteinaceous material in solution or in suspension is preferably around 5-20% by weight and could be pasteurised before introducing proteases. The ratio enzyme/protein may be 0.1-10% weight/weight and preferably of about 1 to 5 %.

Hydrolysis may be conducted at a temperature of about 35°C to 65°C, during 30 minutes to 10 hours, preferably 30 min to 4 hours at pH values within the range 2.5 to 11, preferably 7.0 to 8.5. If desired the pH of the solution can be adjusted and regulated with citric acid, food grade HCl or NaOH, NH₄OH, KOH, Ca(OH)₂ for instance at a concentration of 2N pure or in blend.

Then, the protein hydrolysate may be submitted to a heat treatment of about 0.1 to 30 min at a temperature of about 70 to 110°C to inactivate residual enzymes (i.e. proteases).

The hydrolysate may be further subjected to a second moderate proteolytic hydrolysis as above to hydrolyse eventually residual soy proteins then again enzyme inactivation by heat treatment as described above.

The protein hydrolysate solution thus obtained can be further clarified by centrifugation and/ or microfiltration and/or ultrafiltration to remove insoluble and intact proteins respectively, and the clear solution is recovered. It is possible to use at industrial scale different type of membranes (spiral, tubular, flat, allow fibbers) made with different materials (minerals, polysulfone, ...) and having different cut off limits between 0.2-2 µm for microfiltration and between 1.000 and 100.000 Dalton for ultrafiltration.

The recovered clear hydrolysate solution can, if desired, be concentrated by evaporation to a dry solid content of 10-50% for a subsequent treatment or spray dried. The hydrolysate can also be freeze dried.

Then, according to a further aspect, a soy protein hydrolysate having a degree of hydrolysis of less than 25% and a reduced antigenicity over 100 times may be used for the preparation of a preventive or hypoallergenic formulae intended for mammals susceptible to soy protein allergy.

Preferably, the soy hydrolysate is prepared according to the process described above. It has been shown that moderate enzymatic hydrolysis of soy proteins reduces allergenicity of soy hydrolysates over 100 times while keeping its tolerogenic capacity. (see examples below). Indeed, different types of soy protein isolates, soy protein hydrolysates with moderate and high degrees of hydrolysis were produced by alcalase and pancreatin treatments on a pilot-scale (1.2-kg proteins). Electrophoresis, peptide size distribution, NH2-N/Ntot and residual antigenicity determined principal physico-chemical characteristics and residual antigenicity of hydrolysates. Then, oral tolerance induction was studied in a rat model by ad libitum feeding of experimental hydrolysates followed by soy protein challenge and determination of specific IgE for evaluation of immunsuppression. Indeed, alcalase treatment allowed to reach the HA domain and with an NH2-N/Ntot of 10% and pancreatin associated to Alcalase (NH2-N/Ntot of 29%) allowed reaching the therapeutical domain with non-detectable residual antigenicity, for example.

The soy hydrolysate may be used to prepare hypoallergenic formulae or petfood composition as described above. It is present in the formulae or composition in an amount of at least 5 % dry solid in the case of a nutritionally complete food, and preferably from 10 to 30 % dry solid. If the soy hydrolysate is used as a supplement, it may be present in an effective amount of at least about 0.1% / of the total protein content.

The method of inducing oral tolerance to soy proteins in an at risk individual, comprises administring to the individual an effective amount of the hypoallergenic formulae or composition as described above.

In a preferred embodiment, the minimal amount required is of at least about 0.1 g soy protein hydrolysate per kg and per day which represent 10% of a daily dose in case of exclusive nutrition.

For adult or infant, only a fraction or total active soy hydrolysate may be administered.

The following examples are given by way of illustration only and in no way should be construed as limiting the subject matter of the present application. The percentages are given by weight otherwise indicated. The examples are preceeded by a brief description of the figure.

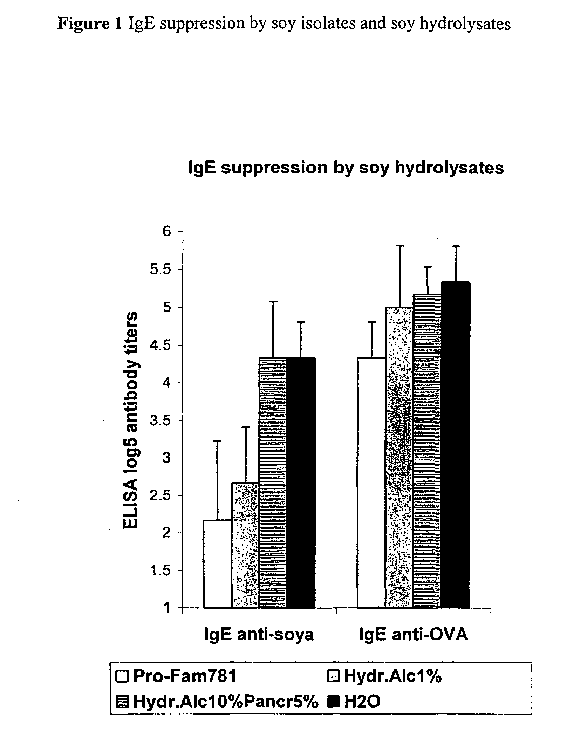

### Figure: Figure 1 represents IgE suppression by soy isolates and soy hydrolysates

### Examples

### Examples 1

### Material and methods

**Enzymes:** Alcalase 2.4 were from Novo Industries (Denmark) and Pancreatin 3tNF (1.13 U F.I.P./mg) from LIB (France).

**The soy isolates** PRO-FAM 781 from ADM was selected as raw material for hydrolysate preparations.

### Composition

| Product | Humidity (%) | Protein* (%) | K (mg/ 100g) | Na (mg/ 100g) | Ca (mg/ 100g) | P (mg/ 100g) |
|---|---|---|---|---|---|---|
| PRO-FAM 781 | 3.48 | 90 | 977 | 792 | 182 | 982 |

| | | | | | | |
|---|---|---|---|---|---|---|
| *N×6.25 (%) **ADM data** | | | | | | |

### Preparation of soy hydrolysate (1) with alcalase 1% at pH 7.5

| | |
|---|---|
| Soy isolate solubilization. | 1330 g of Pro-Fam 781 were dispersed in 19 litres of preheated water at 55°C. |
| | pH after reconstitution 6.85. |
| PH adjustment at 7.50. | Adjustment at pH 7.50 with 38.0 ml of NaOH 2N+KOH 2N. |
| Proteolysis | 12 g of alcalase, 50min at 55 °C, |
| | pH was regulated at 7.5 by addition of NaOH 2N+KOH 2N (147 ml) pH stat. |
| Enzyme inactivation and protein denaturation 10 min at 85-91 °C. | Direct steam injection 3 bars. |
| Cooling at 4°C. | |
| Freezing of hydrolysate Lyophilization 1. | |

### Preparation of soy hydrolysate (2) with alcalase 10% and pancreatin 5% at pH 8.0

| | |
|---|---|
| Soy isolate solubilization. | 1330 g of Pro-Fam were dispersed in 19 litres of preheated water at 55°C. |
| | pH after reconstitution 6.78. |
| PH adjustment at 8.0. | Adjustment at pH 8.0 with 64 ml of NaOH 2N+KOH 2N. |
| Proteolysis I. | 120 g of alcalase, 4h at 55 °C. |
| | pH was regulated at 8.0 by addition of NaOH 2N+KOH 2N (529 ml) pH stat. |
| Proteolysis II . | 60 g pancreatin, 4h at 55°C. |
| | pH was regulated at 8.0 by addition of NaOH 2N+KOH 2N (95 ml) pH stat. |
| Enzyme inactivation 10 min at 85-92°C. | Direct steam injection 3 bars. |
| Cooling at 4°C. | |
| Freezing of hydrolysate Lyophilization. | |

### Analysis

### • Total nitrogen determination, Ntot

Total nitrogen was determined by the Dumas procedure Using instruction manual NA 25 series Elemental analyser (REV.W060595mw) from Carlo Erba Instruments ThermoQuest Italia S. pA Strada Rivoltana 20090 Rodano MI.

### • N-NH₂/Ntot determination

The N-NH2/Ntot (%) was measured by the TNBS method according to Adler-Nissen (J. Agric. Food. Chem. 1979 27: 1256-1262).

### • Electrophoresis Phast system SDS-PAGE silver stain

This was performed according to separation technique file n°111 (ref, 18-1010-63) from the PhastSystem User manual (80-1320-15) and using fast gel silver kit (Cat. N°. 17-0617-01) from Pharmacia LKB Biotechnology, S 75182 Uppsala, Sweden.

### • Peptide analysis by HPLC

Hydrolysates were characterised by gel filtration chromatography on a TSK 2000 SWXL column (Hewlet Packard), with a HP 1050 HPLC system. Detection was at 220 nm with a diode array detector.

Operating conditions were as follows: room temperature, flow rate 0.5 ml/min; solvent: 0.1% TFA in water (v/v). Molecular weight markers were prepared at 0.5 mg/ml final concentration each and were injected separately.

Samples were dissolved at a final concentration of 0.5 mg/ml in 0.1 % TFA and filtered through a Nylon Acrodisc 0.22 µm membrane (Gelman Science) prior to injection onto the column. Molecular weight distributions were derived from the cumulative size distribution based on peak surface (% area versus LgMW; total surface: 100%).

### • ELISA inhibition for soy antigenicity

Residual soy antigenicity was determined by ELISA inhibition with a polyclonal rabbit anti-soy protein antiserum. Wells of microtitration plates were coated with 150µl of a soy protein concentrate PP610 at 50 µg/ml in carbonate-bicarbonate buffer and incubated 24 hours at 4°C. Plates were washed 4 times in a PBS-Tween buffer and free reacting sites were blocked by adding 200 µl/well of fish gelatin (0.5 % in PBS-Tween).

Plates were incubated 1 hour at room temperature (RT) and washed again 4 times in PBS-Tween. In separate tubes, 1 part of standard soy protein (PP610) dilution or test sample are incubated for 1 hour at RT with 1 part of rabbit anti-soy protein antibody (diluted 1:2000). After incubation, 100 µl of this inhibition mixture is added to the above coated and blocked microtitration wells and incubated 2 hours at RT.

Plates are washed 4 times in PBS-Tween. A goat anti-rabbit peroxidase labeled conjugate (0.1 ml of a 1:2000 dilution) is then added, plates incubated 1 hour at RT and washed 4 times in PBS-Tween. The chromogenic substrate (0.1 ml 0-phenylene-diamine) is added. After 15 minutes incubation, optical density is read at 492 nm on an ELISA plate reader.

### • Evaluation of soy hydrolysate tolerogenicity

The oral tolerance inducing capacity of soy products was investigated with the help of an in vivo rat model. Groups of Sprague-Dawley rats (6 animals/group) raised on a soy protein free diet were given different experimental liquid soy proteins / soy hydrolysates or water (control) ad libitum in their drinking bottles and a solid "soy protein free" pellet diet from days 1 to 7 of the experiment. Animals were given the following products:
group A, Pro-Fam 781(15g/L);
group B, Pro-Fam 781 Alcalase 1% hydrolysate (120 g/L);
group D, Pro-Fam 781 Alcalase 10% + Pancreatine 5% hydrolysate (120 g/L);
group E, H₂O (control).

All rats were immunized on day 8 by subcutaneous injection of 4 mg Pro-Fam 646 + 0.1 mg Ovalbumin + 0.2 ml 3% Al(OH)3.

On day 21, all animals were killed. Blood was drawn and sera were analysed for specific IgE antibodies (anti-soy and anti-Ovalbumin) by ELISA, as previously described (Fritsché R, Bonzon M. Int Arch Allergy Appl Immunol 1990;93:289-93).

### RESULTS

### • Hydrolysis of soy protein isolates

Starting with Pro-Fam 781 (table 1), which had been already hydrolysed by the supplier, alcalase treatment allowed to reduce antigenicity just below what it is needed for a preventive HA formula (hydrolysate 1). Hydrolysate 2 was obtained by addition of pancreatin after alcalase. Additional reduction of antigenicity and NH2-N/Ntot increase significantly and peptide repartition shows decrease of large peptides.

**Table 1: Characteristics of soy protein hydrolysates obtained by hydrolysis soy isolate Pro-Fam 781 with low viscosity that has been already hydrolysed by the supplier.**

| | | | |
|---|---|---|---|
| Product | Pro-Fam 781 | Pro-Fam 781 Hydrolysate 1 | Pro-Fam781 Hydrolysate 2 |
| Hydrolysis conditions | Not treated | Alcalase 1%, 50 min pH 7.5 | Alcalase 10%, 4 h, pH 8.0 Pancreatin 5%, 4 h, pH 8.0 |
| Mole OH/kg protein | | 0.49 | 2.08 |
| Prot N*6.38 % | 90 | 89 | 77 |
| SDS_PAGE Residual protein | | Large Diffuse band below 14 00ODa | clean |
| Median 50% Da | | 1810 | 480 |
| Peptide distribution area 214 nm % KDa | | 14.8 % >5 KDa | 0.3 % >5 KDa |
| | | 50 % 5-1 KDa | 18.7% 5-1 KDa |
| | | 14.5% 1-0.5 KDa | 23.5 % 1-0.5 KDa |
| | | 20.7% <0.5 KDa | 57.5 % <0.5 KDa |
| NH2-N/Ntot (%) | 2.2 | 9.5 | 27.8 |
| Residual antigenicity µg soy /g proteins | 420000 | 6800 | <10 |

### • Suppression of IgE response by soy hydrolysate feeding

Figure 1 shows that Alcalase 1% hydrolysed soy proteins are able to suppress a specific IgE anti-soy protein response when fed to animals during 7 days before challenge.

On the contrary, when soy proteins were strongly hydrolysed, first by Alcalase 10% followed by Pancreatin 5%, the hydrolysate obtained does not have any tolerogenic activity anymore (Fig 1 shows that no IgE suppression is achieved by prefeeding with this product).

As positive control, intact soy protein isolate Pro-Fam 781 induced the lowest level of IgE anti-soy antibodies and the negative control (H2O group) the highest amounts. IgE responses to the control antigen Ovalbumin were not significantly different among groups.

The hydrolysate obtained by alcalse treatment has both a relatively low residual antigenicity (6.8 mg soy antigen / g protein) while keeping a good IgE suppressing activity (2.5 log 5 IgE titer compared to 4.3 log 5 IgE titer for the control group).

The results demonstrated that moderate enzymatic hydrolysis of soy proteins reduces allergenicity of soy hydrolysates over 100 times while keeping its tolerogenic capacity.

### Example 2: Tolerogenic infant formula

The composition for 100 g of powder contains 15 % of soy hydrolysate as prepared in example 1, 25 % of fats, 55 % carbohydrates (including maltodextrin 37 %, starch 6 %, sucrose 12 %), traces of vitamins and oligoelements to meet daily requirements, 2 % minerals and 3 % moisture.

13 g of this powder is mixed in 100 ml of water. The obtained composition is an infant formula particularly intended for at risk infant to whole soy protein allergy.

### Example 3: liquid tolerogenic infant formula

In order to obtain a tolerogenic infant formula, we prepare the following mixture containing for 100 ml of formula, 1.6 % peptides (soy hydrolysate as prepared in example 1, 3.4 % fat, 7.4 % carbohydrates (including maltodextrin, sucrose, starch), traces of vitamins and oligoelements to meet daily requirements, 0.3 % of minerals and 79.9 % of water.

The obtained tolerogenic infant formula is particularly intended for at risk infant to whole soy protein allergy.

### Example 4: pet food composition

In a feed mixture made up corn, low allergenic protein mixture chicken and potatoe, salts, vitamins and minerals, about 0.1% of the total proteinic content is represented by the soy protein hydrolysate as prepared in example 1. The moistened feed leaving the preconditioner is then fed into an extruder-cooker and gelatinised. The gelatinised matrix leaving the extruder is forced through a die and extruded. The extrudate leaving the die head is cut into pieces suitable for feeding to dogs, dried at about 110°C for about 20 minutes, and cooled to form pellets. The resulting water activity of the pellets is about 0.6. The pellets are sprayed with a coating substrate comprising tallow fat.

Accordingly, the dry dog food obtained thereof is particularly intended for inducing oral tolerance to soy proteins.

## Claims

1. A hypoallergenic soy-based formula for the induction of oral tolerance to soy proteins in at risk individuals, which comprises a soy protein hydrolysate having a degree of hydrolysis of less than 25% and a reduced antigenicity over 100 times if compared to intact soy proteins.

2. A formula according to claim 1, wherein the degree of hydrolysis is 10 to 20 %.

3. A formula according to claim 1 or 2, which is in the form of a nutritionally complete composition comprising an amount of soy protein hydrolysate of at least 5% dry solid, preferably about 10 to 30% dry solid.

4. A formula according to one of the claims 1 to 3, which is in the form of a supplement comprising an effective amount of soy protein hydrolysate of at least about 0.1% of the total protein content of the formula.

5. The use of a soy protein hydrolysate having a degree of hydrolysis of less than 25% and a reduced antigenicity over 100 times if compared to intact soy proteins, for the preparation of a hypoallergenic formula for the induction of oral tolerance to soy proteins in mammals susceptible to soy protein allergy.

6. The use according to claim 6, in which the soy protein hydrolysate is present in a nutritionally complete formula in an amount of at least 5 % dry solid, and preferably from 10 to 30 % dry solid.

7. The use according to claim 6, in which the soy protein hydrolysate is present as a supplement in an amount of at least 0.1% of the total protein content.

## Patentansprüche

1. Hypoallergene Formulanahrung auf Sojabasis zur Induzierung einer oralen Toleranz gegenüber Sojaproteinen bei gefährdeten Personen, die ein Sojaproteinhydrolysat mit einem Hydrolysegrad von weniger als 25 % und einer über das 100-fache verminderten Antigenität, verglichen mit intakten Sojaproteinen, aufweist.

2. Formulanahrung nach Anspruch 1, wobei der Hydrolysegrad 10 bis 20 % beträgt.

3. Formulanahrung nach Anspruch 1 oder 2, die in Form einer ernährungsmäßig kompletten Zusammensetzung vorliegt, die eine Menge an Sojaproteinhydrolysat von wenigstens 5 % Trockenfeststoffe, vorzugsweise etwa 10 bis 30 % Trockenfeststoffe, aufweist.

4. Formulanahrung nach einem der Ansprüche 1 bis 3, die in Form einer Ergänzung vorliegt, die eine wirksame Menge von Sojaproteinhydrolysat von wenigstens etwa 0,1 % des gesamten Proteingehalts der Formulanahrung aufweist.

5. Verwendung eines Sojaproteinhydrolysats mit einem Hydrolysegrad von weniger als 25 % und einer mehr als das 100-fache verminderten Antigenität im Vergleich mit intakten Sojaproteinen zur Herstellung einer hypoallergenen Formulanahrung zur Induktion einer oralen Toleranz gegenüber Sojaproteinen bei Säugetieren, die bezüglich einer Sojaproteinallergie gefährdet sind.

6. Verwendung nach Anspruch 6, wobei das Sojaproteinhydrolysat in einer ernährungsmäßig kompletten Formulanahrung in einer Menge von wenigstens 5 % Trockenfeststoffe, und vorzugsweise von 10 bis 30 % Trockenfeststoffe, vorliegt.

7. Verwendung nach Anspruch 6, wobei das Sojaproteinhydrolysat als Ergänzung in einer Menge von wenigstens 0,1 % des Gesamtproteingehalts vorliegt.

## Revendications

1. Formulation hypoallergénique à base de soja pour l'induction de la tolérance orale aux protéines de soja chez des individus à risque, comprenant un hydrolysat de protéines de soja ayant un degré d'hydrolyse inférieur à 25 % et une antigénicité réduite de plus de 100 fois par comparaison à des protéines de soja intactes.

2. Formulation selon la revendication 1, dans laquelle le degré d'hydrolyse est de 10 à 20 %.

3. Formulation selon la revendication 1 ou 2, qui est sous la forme d'une composition complète du point de vue nutritionnel, comprenant une quantité d'hydrolysat de protéines de soja d'au moins 5 % de solides secs, de préférence d'environ 10 à 30 % de solides secs.

4. Formulation selon l'une quelconque des revendications 1 à 3, qui est sous la forme d'un complément comprenant une quantité efficace d'hydrolysat de protéines de soja d'au moins environ 0,1 % de la teneur totale en protéines de la formulation.

5. Utilisation d'un hydrolysat de protéines de soja ayant un degré d'hydrolyse inférieur à 25 % et une antigénicité réduite de plus de 100 fois par comparaison à des protéines de soja intactes, pour la préparation d'une formulation hypoallergénique pour l'induction de la tolérance orale aux protéines de soja chez des mammifères susceptibles de présenter une allergie aux protéines de soja.

6. Utilisation selon la revendication 6, dans laquelle l'hydrolysat de protéines de soja est présent dans une formulation complète du point de vue nutritionnel en une quantité d'au moins 5 % de solides secs et de préférence de 10 à 30 % de solides secs.

7. Utilisation selon la revendication 6, dans laquelle l'hydrolysat de protéines de soja est présent en tant que complément en une quantité d'au moins 0,1 % de la teneur totale en protéines.
